# EUROPEAN PATENT APPLICATION

(11) **EP 1 657 282 A1**
(43) Date of publication of application: **17.05.2006**
(21) Application number: 05256897.9
(22) Date of filing: 07.11.2005
(51) Int. Cl.: C08L 83/04, C08L 71/02

(54) **Fluororubber/silicone rubber blend and molded rubber articles**

(30) Priority: 10.11.2004 JP 2004326137
(71) Applicant: Shin-Etsu Chemical Co., Ltd., Tokyo (JP)
(72) Inventor: Osawa, Yasuhisa, Shin-Etsu Chemical Co., Ltd., Usui-gun, Gunma-ken (JP)
(74) Representative: Stoner, Gerard Patrick

(57) **Abstract**

A rubber composition is obtained by mixing (a) a perfluoropolyether-base fluororubber composition having Si-CH=CH₂ as crosslinking sites with (b) a silicone rubber composition having the same crosslinking system as component (a). The resulting blend has the advantages of both the fluororubber and silicone rubber compositions.

## Description

This invention relates to rubber blend compositions comprising an uncured perfluoropolyether-base fluororubber composition having good solvent resistance, chemical resistance, heat resistance and low-temperature properties in admixture with a silicone rubber composition having good compression set and processability, and articles obtained by curing the same.

### BACKGROUND

Prior art fluororubbers derived from vinylidene fluoride have been used in a wide range of application covering automobile and machinery industries because they are elastomers having good heat resistance, chemical resistance and mechanical strength.

Unfortunately, the chemical resistance of these fluororubbers is less satisfactory. When contacted with polar solvents such as ketone, lower alcohol, carbonyl and organic acid solvents, they are readily swollen. When contacted with amine-containing chemicals, they are degraded, resulting in extreme drops of rubber strength and elongation. With respect to low-temperature properties, they lose rubber elasticity at temperatures below -20°C to such an extent that they are no longer used as sealing members. The use of fluororubbers in cold areas is thus prohibited.

To overcome these drawbacks, liquid or millable type fluorinated curable compositions comprising primarily a perfluoro compound and a fluorinated organohydrogenpolysiloxane were proposed in JP-A 8-199070 corresponding to USP 5,665,846, JP-A 2000-007835 corresponding to USP 6,297,339 and USP 6,512,041, JP-A 2001-106893, and JP-A 2003-201401.

However, since these fluorinated curable compositions are difficult to blend with inexpensive rubber of different type, molded parts thereof are generally expensive, which limits their use.

With regard to rubber physical properties and processability, some rubbers of different type are superior. Specifically, as compared with silicone rubber, fluororubber is surpassed in rubber strength, elongation, compression set, roll milling, and mold release.

It could be contemplated to blend two types of rubbers to form a composition having the advantages of both the fluorinated curable composition and silicone rubber composition. Because of the lack of compatibility, the resulting blend is low in some physical properties. A delamination phenomenon occurs because of the lack of interaction between polymers, so that the resulting rubber is not commercially viable.

An object herein is to provide new and useful rubber blend compositions having the advantages of both perfluoropolyether-base fluororubber compositions and silicone rubber compositions, reducing or avoiding delamination tendencies. Related aspects are methods of making such compositions, methods of using them especially by molding, and articles obtained by molding and curing them.

The inventors have found that a rubber composition obtained by admixing (a) a perfluoropolyether-base fluororubber composition having Si-CH=CH₂ as crosslinking sites with (b) a silicone rubber composition having the same crosslinking system as component (a) and a rubber part obtained by molding and curing the composition experience neither extreme drops of properties nor delamination.

In one aspect, the invention provides a rubber composition comprising in admixture (a) a perfluoropolyether-base fluororubber composition having Si-CH=CH₂ as crosslinking sites and (b) a silicone rubber composition having the same crosslinking system as component (a).

In one embodiment, the crosslinking system common to the fluororubber composition and the silicone rubber composition is a peroxide crosslinking system. In another embodiment, the crosslinking system common to the fluororubber composition and the silicone rubber composition is an addition crosslinking system.

The preferred perfluoropolyether-base fluororubber composition (a) is a crosslinkable fluororubber composition comprising (A) a polymer obtained from a perfluoro compound having at least two alkenyl groups on the molecule and a divalent perfluoroalkylene or perfluoropolyether structure on the backbone and a second compound having at least two hydrosilyl groups on the molecule and capable of addition reaction with alkenyl groups, the second compound being added to some of the alkenyl groups on the perfluoro compound, (B) a reinforcing filler, and (C) an addition reaction crosslinker having a hydrosilyl group on the molecule or a peroxide crosslinker in a sufficient amount for component (A) to cure.

The preferred silicone rubber composition (b) is one comprising (D) a diorganopolysiloxane having the average compositional formula (I):

(R¹¹)ₓSiO_{(4-x)/2} (I)

wherein R¹¹ is a substituted or unsubstituted monovalent hydrocarbon group and x is a number of 1.95 < x < 2.05, 0.01 to 15 mol% of all R¹¹ bonded to silicon atoms being monovalent aliphatic unsaturated hydrocarbon groups, (E) a reinforcing filler, and (F) a crosslinker.

In another aspect, the invention provides a molded rubber article produced by molding and curing the rubber composition defined above. The molded rubber article is typically a sealing member, O-ring, diaphragm, hose, cap or valve part.

The rubber composition of the invention possesses both the properties of a perfluoropolyether-base fluororubber composition and the properties of a silicone rubber composition. A molded rubber part obtained by molding and curing the composition experiences no delamination, maintains the properties of both the components and remains stable. The invention is thus of great commercial worth.

### BRIEF DESCRIPTION OF THE DRAWINGS

FIG. 1 is a photograph showing a section of a dumbbell specimen for testing, indicating the rubber rupture section free of anomaly or delamination.
FIG. 2 is a photograph showing another section of a dumbbell specimen for testing, indicating the rubber rupture section free of anomaly or delamination.
FIG. 3 is a photograph showing a section of a dumbbell specimen for testing, indicating that the rubber rupture section is uneven and delaminated.
FIG. 4 is a photograph showing another section of a dumbbell specimen for testing, indicating that the rubber rupture section is uneven and delaminated.

### FURTHER EXPLANATIONS; OPTIONS AND PREFERENCES

In the rubber composition of the invention, component (a) is a perfluoropolyether-base fluororubber composition having Si-CH=CH₂ as crosslinking sites, which may be any of such compositions e.g. as disclosed in the above-cited patents: JP-A 8-199070, JP-A 2000-007835, JP-A 2001-106893, and JP-A 2003-201401. They are commercially available as SIFEL® series from Shin-Etsu Chemical Co., Ltd.

Specifically, JP-A 8-199070 discloses a curable composition comprising
(A') a fluorinated amide compound having the general formula (1): 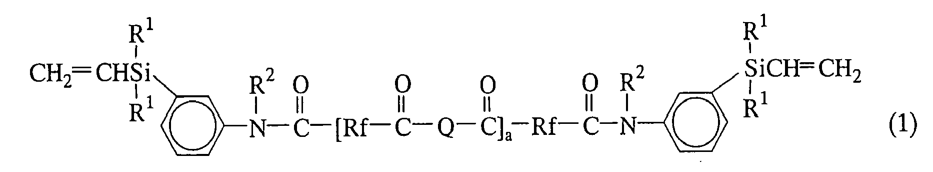 wherein R¹ is a substituted or unsubstituted monovalent hydrocarbon group, R² is hydrogen or a substituted or unsubstituted monovalent hydrocarbon group, Q is a group of the formula (2): 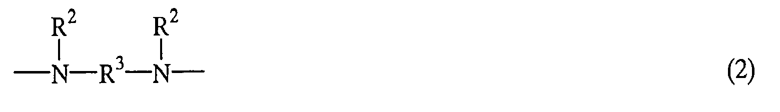 wherein R³ is a substituted or unsubstituted divalent hydrocarbon group which may be separated by at least one of oxygen, nitrogen and silicon atoms, or the formula (3): 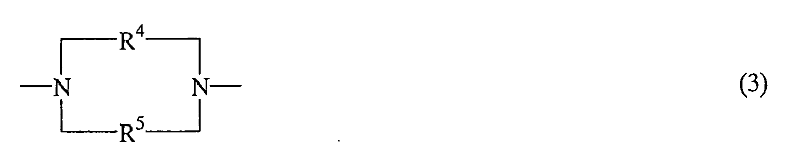 wherein R⁴ and R⁵ each are a substituted or unsubstituted divalent hydrocarbon group, Rf is a divalent perfluoroalkylene or divalent perfluoropolyether group, and a is an integer inclusive of 0,
(B') a fluorinated organohydrogensiloxane having at least one monovalent perfluorooxyalkyl group, monovalent perfluoroalkyl groups, divalent perfluorooxyalkylene group or divalent perfluoroalkylene group and at least two hydrosilyl groups on the molecule, in such an amount that 0.5 to 5 moles of hydrosilyl groups (Si-H groups) are available per mole of aliphatic unsaturated groups in the composition, and
(C') a catalytic amount of a platinum group compound.

JP-A 2000-007835 discloses a crosslinkable fluororubber composition comprising (A) a polymer obtained from a perfluoro compound having at least two alkenyl groups on the molecule and a divalent perfluoroalkylene structure or divalent perfluoropolyether structure on the backbone and a second compound having at least two hydrosilyl groups on the molecule and capable of addition reaction with alkenyl groups, the second compound being added to some of the alkenyl groups on the perfluoro compound, (B) a reinforcing filler, and (C) an addition reaction crosslinker having a hydrosilyl group on the molecule or a peroxide crosslinker in a sufficient amount for component (A) to cure.

JP-A 2001-106893 discloses a crosslinkable fluororubber composition comprising the same components (A), (B) and (C) as in JP-A 2000-007835, and (D') a surface treating agent having at least one fluoroalkyl group or fluoropolyalkylether group and one silanol group on the molecule.

JP-A 2003-201401 discloses a crosslinkable fluororubber composition comprising (A") a polymer having a viscosity of at least 1,000 Pa·s at 25°C and represented by the general formula (4): 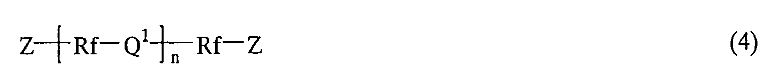 wherein n is an integer of at least 1, Rf is a divalent perfluoroalkylene or perfluorooxyalkylene group, Q¹ is a divalent organic group, and Z is a monovalent organic group, (B") a reinforcing filler, and (C") a peroxide crosslinker.

Typically in formula (4), Rf is a divalent perfluoroalkylene group: -CₘF₂ₘ- wherein m is an integer of 2 to 15, or a divalent perfluorooxyalkylene group of the formula (5), (6) or (7). 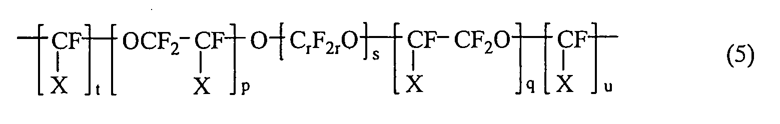 X is each independently F or CF₃ group, r is an integer of 2 to 6, t and u each are 1 or 2, p and q each are an integer of 0 to 200, and s is an integer of 0 to 6, with the proviso that p, q and s are not equal to 0 at the same time. 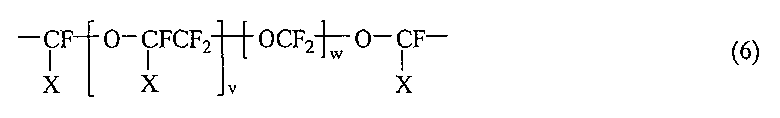 X is as defined above, v and w each are an integer of 1 to 50. 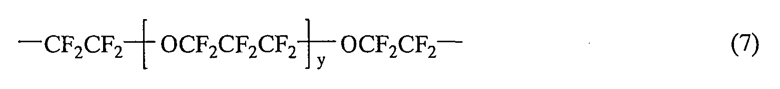 Herein y is an integer of 1 to 100.

In formula (4), Q¹ is a group of the formula (8). 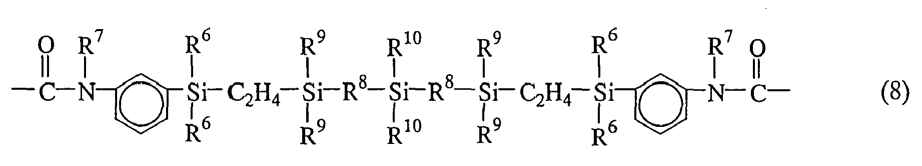 R⁶ is a monovalent hydrocarbon group of 1 to 10 carbon atoms selected from alkyl, cycloalkyl, aryl, and aralkyl groups, and substituted forms of these groups in which some or all of the hydrogen atoms are replaced by halogen atoms; R⁷ is hydrogen or a monovalent hydrocarbon group as defined for R⁶; R⁸ is an oxygen atom or a divalent hydrocarbon group selected from among alkylene, cycloalkylene, and arylene groups of 1 to 8 carbon atoms, substituted forms of these groups in which some hydrogen atoms are replaced by halogen atoms, and combinations of alkylene and arylene groups; R⁹ is a monovalent hydrocarbon group as defined for R⁶; and R¹⁰ is a monovalent hydrocarbon group as defined for R⁶, or a monovalent hydrocarbon group selected from among monovalent hydrocarbon groups of 2 to 20 carbon atoms containing an aliphatic unsaturated bond and substituted forms of these groups in which some or all of the hydrogen atoms are replaced by halogen atoms.

In formula (4), Z is a monovalent organic group of 1 to 30 carbon atoms which may be separated by one or more atoms selected from among oxygen, nitrogen, sulfur and silicon atoms.

Of these compositions, the crosslinkable fluororubber composition disclosed in JP-A 2000-007835 and JP-A 2001-106893 is preferred, comprising (A) a polymer obtained from a perfluoro compound having at least two alkenyl groups on the molecule and a divalent perfluoroalkylene structure or divalent perfluoropolyether structure on the backbone and a second compound having at least two hydrosilyl groups on the molecule and capable of addition reaction with alkenyl groups, the second compound being added to some of the alkenyl groups on the perfluoro compound, (B) a reinforcing filler, and (C) an addition reaction crosslinker having a hydrosilyl group on the molecule or a peroxide crosslinker in a sufficient amount for component (A) to cure.

The crosslinkable fluororubber composition of this type is more detailedly described.

Component (A) of the crosslinkable fluororubber composition is a polymer comprising (I) a perfluoro compound having at least two alkenyl groups in the molecule and a divalent perfluoroalkylene or divalent perfluoropolyether structure in the backbone and (II) a compound having at least two hydrosilyl groups in the molecule and capable of addition reaction with alkenyl groups wherein the hydrosilyl-bearing compound is added to some of the alkenyl groups in the perfluoro compound.

The perfluoro compound as component (I) is technically difficult to synthesize into a high molecular weight polymer as typified by a resin or rubber. The perfluoro compound should have at least two alkenyl groups in the molecule and a divalent perfluoroalkylene or divalent perfluoropolyether structure in the backbone. It is preferably a linear perfluoro compound having a viscosity of about 25 to about 1,000,000 centistokes at 25°C.

The perfluoro compound is typically of the following general formula (1).

CH₂=CH-(D)_{z}-(Rf-Q')ₐ-Rf-(D)_{z}-CH=CH₂ (i)

Herein, D is independently -CH₂-, -CH₂O- , -CH₂OCH₂-, -Y-NR¹⁵-SO₂- or -Y-NR¹⁵-CO- wherein Y is -CH₂- or 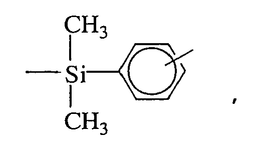 and R¹⁵ is hydrogen or a substituted or unsubstituted monovalent hydrocarbon group. Rf is a divalent perfluoroalkylene group or divalent perfluoropolyether group. Letter z is independently equal to 0 or 1, and a is an integer inclusive of 0.

Q' is a group of the following general formula (ii), (iii) or (iv).

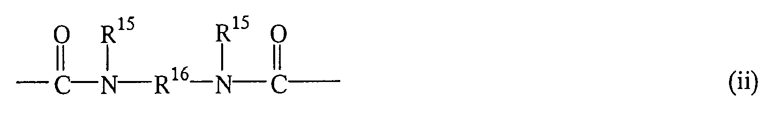

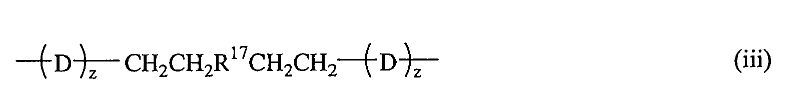

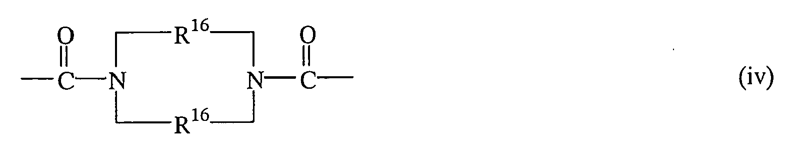

D, z, and R¹⁵ are as defined above; R¹⁶ is a substituted or unsubstituted divalent hydrocarbon group; and R¹⁷ is a substituted or unsubstituted divalent hydrocarbon group which may be separated by at least one intervening atom selected from oxygen, nitrogen, silicon and sulfur atoms, or a group of the following general formula (v) or (vi).

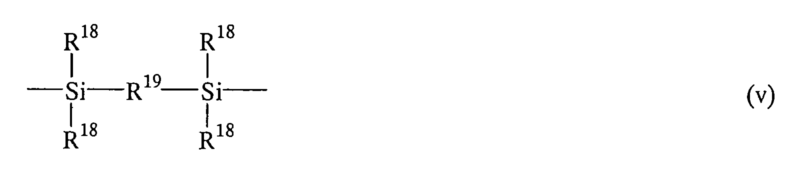

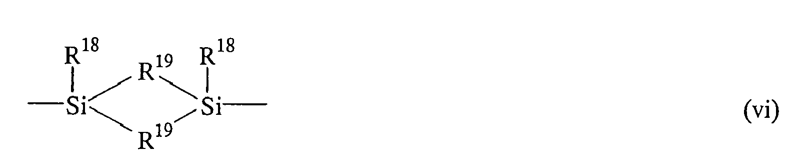

R¹⁸ is a substituted or unsubstituted monovalent hydrocarbon group and R¹⁹ is a group containing in its backbone structure at least one atom selected from carbon, oxygen, nitrogen, silicon and sulfur atoms.

Specifically, Rf is a divalent perfluoroalkylene group or divalent perfluoropolyether group. The divalent perfluoroalkylene group is preferably represented by the formula: -Cₘ,F_{2m'}- wherein m' is from 1 to 10, preferably 2 to 6. The divalent perfluoropolyether group is preferably represented by the formula: 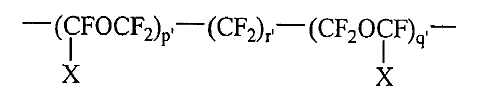 wherein X is F or CF₃, p', q' and r' are integers satisfying p' ≥ 1, q' ≥ 1, 2 ≤ p'+q' ≤ 200, especially 2 ≤ p'+q' s 110, and 0 ≤ r' s 6, 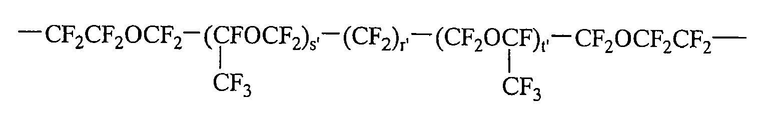 wherein r', s' and t' are integers satisfying 0 ≤ r' ≤ 6, s' ≥ 0, t' ≥ 0, 0 ≤ s'+t' ≤ 200, especially 2 ≤ s'+t' ≤ 110, 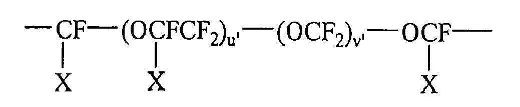 wherein X is F or CF₃, u' is an integer of 1 to 100 and v' is an integer of 1 to 50, or

-CF₂CF₂-(OCF₂CF₂CF₂)_{w'}-OCF₂CF₂-

wherein w' is an integer of 1 to 100.

Next, component (II) is described. It is a compound having at least two hydrosilyl groups in the molecule and capable of addition reaction with alkenyl groups. Included are organic compounds containing hydrosilyl groups and organic silicon compounds containing hydrosilyl groups. When dispersibility and heat resistance are taken into account, compounds of the following formulae (vii) and (viii) are preferred.

W-CH₂CH₂-(D)_{z}-Rf-(D)_{z}-CH₂CH₂-W (vii)

Rf-(D)_{z}-CH₂CH₂-W (viii)

In the formulae (vii) and (viii), D, z, and Rf are as defined above. W is a group of the following general formula (9): 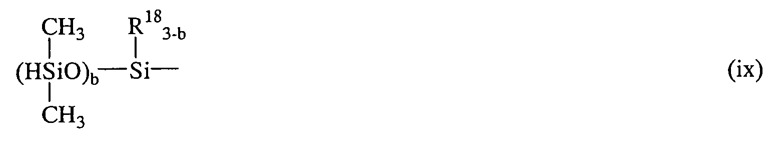 wherein R¹⁸ is a substituted or unsubstituted monovalent hydrocarbon group and b is equal to 1, 2 or 3 for the compound of formula (vii) and equal to 2 or 3 for the compound of formula (viii).

Specifically, D is independently selected from among -CH₂-, -CH₂O-, -CH₂OCH₂-, -Y-NR¹⁵-SO₂-, and -Y-NR¹⁵-CO- wherein Y is -CH₂- or 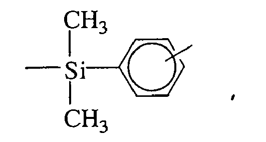 and R¹⁵ is hydrogen or a substituted or unsubstituted monovalent hydrocarbon group; Rf is a divalent perfluoroalkylene or divalent perfluoropolyether group; and z is independently equal to 0 or 1.

The polymer as component (A) is obtainable by effecting addition reaction of hydrosilyl groups in component (II) to some of the alkenyl groups in component (I). The remaining alkenyl groups in component (I) are left in the polymer. This polymer is a non-flowing gel-like polymer.

Components (I) and (II) are preferably used in such amounts that the molar ratio of hydrosilyl groups in component (II) to alkenyl groups in component (I) may range from 0.1/1 to 0.99/1, especially from 0.3/1 to 0.8/1. With a ratio of less than 0.1, the perfluoro compound would not be gelled, but somewhat thickened so that even after addition of a filler, the resulting compound may be a liquid rubber which is difficult to sheet by means of a two-roll rubber mill. With a ratio in excess of 0.99, the resulting polymer would become cured rubber to which a filler is added with difficulty or which cannot be worked on rolls.

For the addition reaction of component (II) to component (I), it is recommended to use an addition reaction catalyst. Preferred catalysts are platinum group metal compounds. The platinum group metal compounds used herein are generally compounds of noble metals which are expensive. For ease of availability, platinum compounds are often employed.

The amount of the catalyst used is not critical and the desirable curing rate will be achieved with a catalytic amount. From the economical aspect or in order to obtain favorable cured products, an appropriate amount of the catalyst is about 0.1 to about 1,000 ppm, more preferably about 0.1 to about 500 ppm of platinum group metal based on the weight of components (I) and (II) combined.

The conditions for the addition reaction may be determined as appropriate. Reaction may be carried out at room temperature although it is accelerated by heating at about 50 to 200°C.

Examples of the reinforcing filler (B) include carbon black, fumed silica and fumed silica treated with silicon-containing surface treating agents. While the fluororubber compositions described herein include two types: liquid rubber compositions and millable rubber compositions, the incorporation of powdered silica as the reinforcing filler is advantageous and important in providing adhesion in both the types.

Examples of such silica include fumed silica, wet silica, ground silica and the like which are used in perfluoropolyether-base fluororubber compositions for the purposes of improving mechanical strength, thermal stability, weather resistance, chemical resistance or flame retardance, or reducing thermal shrinkage upon curing, or reducing a coefficient of thermal expansion of the cured elastomer. These silicas may have been treated with various surface treating agents. Of these, fumed silica is preferred for enhancing mechanical strength and improving the dispersion stability of components. More preferred for improved dispersion is fumed silica treated with surface treating agents in the form of silicon compounds such as silanes.

Suitable surface treating agents (hydrophobizing agents) for treating dry silica, known as fumed silica, are silicon compounds having a hydrolyzable group, for example, organochlorosilanes such as dimethyldichlorosilane and trimethylchlorosilane, silazane compounds such as hexamethyldisilazane, and cyclic silazanes such as hexamethylcyclotrisilazane.

Silica should preferably have a specific surface area of at least 50 m²/g (BET method) for improving mechanical properties. A specific surface area of up to 300 m²/g is desirable because otherwise, a silica-loaded composition provides a considerable viscosity buildup to impede the subsequent compounding operation.

For the silica fine powder which has been surface treated with a surface treating agent for hydrophobization, it is preferred to treat silica directly in powder form. The treatment may be conducted by any well-known treatment techniques, for example, by feeding untreated silica fine powder and a treating agent to a mechanical compounding apparatus closed under atmospheric pressure or to a fluidized bed, and mixing at room temperature or elevated temperature optionally in the presence of an inert gas and optionally in the presence of a catalyst and water for promoting hydrolysis. This compounding is followed by drying. The amount of the treating agent used may be at least an amount calculated from the area of silica to be covered with the agent.

In addition, the silica should preferably have a bulk density of 30 to 80 g/L. Silica with a bulk density of less than 30 g/L may cause a viscosity buildup to the composition to impede compounding whereas a bulk density of more than 80 g/L may fail to achieve the desired reinforcement.

An appropriate amount of silica compounded is 1 to 50% by weight based on the total weight of the perfluoropolyether-base fluororubber composition. Less than 1% by weight of silica may be too small to provide the desired adhesion, resulting in poor rubber physical properties. More than 50% by weight of silica provides improved adhesion, but can deprive the rubber material of elongation and strength. The preferred amount of silica is 5 to 30% by weight.

Component (C) is a crosslinking agent which is (C-1) a crosslinking agent having a hydrosilyl group in a molecule and capable of addition reaction or (C-2) a peroxide crosslinking agent.

The crosslinking agent (C-1) is typically a organohydrogenpolysiloxane having at least two, preferably at least three, hydrosilyl groups in a molecule. Such organohydrogenpolysiloxane may be those commonly used in silicone rubber compositions of the addition reaction curing type. In particular, those siloxanes described above as component (II) can be used.

The amount of crosslinking agent (C-1) added is sufficient to react with residual alkenyl groups in component (A) for thereby curing component (A). From the standpoint of the shelf stability of rubber compositions, like prior art millable rubber compositions, the crosslinking agent is desirably added to the polymer composition immediately before rubber molding. It is important for stabilizing rubber physical properties to determine the amount of the crosslinking agent added by taking into account the type and amount of the crosslinking compound used as component (II) in component (A). Specifically, the crosslinking agent is preferably added in such an amount that the ratio of {hydrosilyl groups in component (II) plus hydrosilyl groups in component (C)}/{alkenyl groups in component (I)} may range from 0.5 to 5, especially from 0.8 to 2.

In crosslinking agent (C-1), an addition reaction catalyst such as a platinum group metal compound may be blended if desired. If the addition reaction catalyst used in the preparation of component (A) is left in component (A), the catalyst need not necessarily be added. The catalyst, if added, is used in a catalytic amount which is as described above.

The other component (C-2) is a peroxide crosslinking agent. Examples of this crosslinking agent include dibenzoyl peroxide, dicumyl peroxide, di-t-butyl peroxide, t-butylperoxyacetate, t-butylperoxybenzoate, and 2,5-dimethyl-2,5-di-t-butylperoxyhexane, with the 2,5-dimethyl-2,5-di-t-butylperoxyhexane being preferred from the standpoints of shelf stability and scorch prevention.

The peroxide crosslinking agent is added in a sufficient amount to cure component (A), preferably 0.1 to 5 parts by weight, more preferably 0.5 to 3 parts by weight per 100 parts by weight of component (A). Less than 0.1 part of the peroxide crosslinking agent would induce insufficient or slow crosslinking whereas more than 5 parts would adversely affect the physical properties of rubber.

While the fluororubber compositions include two types: liquid and millable rubber compositions as mentioned above, the millable rubber compositions are preferred in blending with another rubber because of ease of mixing on a roll mill. Most preferred are crosslinkable fluororubber compositions, as disclosed in JP-A 2000-007835 and JP-A 2001-106893, comprising (A) a polymer obtained from a perfluoro compound having at least two alkenyl groups on the molecule and a divalent perfluoroalkylene structure or divalent perfluoropolyether structure on the backbone and a second compound having at least two hydrosilyl groups on the molecule and capable of addition reaction with alkenyl groups, the second compound being added to some of the alkenyl groups on the perfluoro compound, (B) a reinforcing filler, and (C) an addition reaction crosslinker having a hydrosilyl group on the molecule or a peroxide crosslinker in a sufficient amount for component (A) to cure.

The other component (b) is a silicone rubber composition. In blending, millable type compositions are preferred to liquid rubber compositions for the same reason as above.

Various silicone rubber compositions are usable herein, e.g. as described in Ito Ed., Silicone Handbook, Nikkan Kogyo Shinbun Co., Ltd., 1990, particularly in Chap. 9, Silicone Rubber, Chap. 11, Modified Silicone Rubber, and Chap. 15, Fluorosilicone. Those compositions described in Chap. 9, Silicone Rubber and Chap. 15, Fluorosilicone are most preferred.

The silicone rubber compositions having Si-CH=CH₂ as crosslinking sites include those of peroxide crosslinking type which cure via an organic peroxide and those of addition crosslinking type which cure via a Si-H group-containing compound and a platinum group metal catalyst.

One typical silicone rubber composition is a composition comprising
(D) a diorganopolysiloxane having the average compositional formula (I):

   (R¹¹)ₓSiO_{(4-x)/2} (I)

   wherein R¹¹ is a substituted or unsubstituted monovalent hydrocarbon group and x is a number of 1.95 < x < 2.05, 0.01 to 15 mol% of all R¹¹ bonded to silicon atoms being monovalent aliphatic unsaturated hydrocarbon groups,
(E) a reinforcing filler, and
(F) a crosslinker.

These components are described in detail. Component (D) is a diorganopolysiloxane having the average compositional formula (I):

(R¹¹)ₓSiO_{(4-x)/2} (I)

wherein R¹¹ is a substituted or unsubstituted monovalent hydrocarbon group and x is a number of 1.95 < x < 2.05. In this diorganopolysiloxane, 0.01 to 15 mol% of all R¹¹ bonded to silicon atoms are monovalent aliphatic unsaturated hydrocarbon groups. If the proportion of aliphatic unsaturated hydrocarbon groups is less than 0.01 mol% of all R¹¹, a cured product having satisfactory tear strength may not be obtained. If the proportion exceeds 15 mol%, a cured product may become brittle and have less satisfactory tear strength.

Suitable monovalent aliphatic unsaturated hydrocarbon groups include alkenyl groups of 2 to 8 carbon atoms such as vinyl and allyl, with vinyl being most preferred. Suitable groups of R¹¹ other than the aliphatic unsaturated hydrocarbon groups include monovalent hydrocarbon groups of 1 to 10 carbon atoms, preferably 1 to 8 carbon atoms, for example, alkyl groups such as methyl and ethyl, aryl groups such as phenyl, aralkyl groups such as benzyl, and substituted forms of these groups in which some or all of the hydrogen atoms are replaced by halogen atoms, such as trifluoropropyl. Of these, methyl is preferred. It is noted that the diorganopolysiloxane (D) may have one or more hydroxyl group attached to a silicon atom.

In formula (I), x is a number from more than 1.95 to less than 2.05. In case x s 1.95, the diorganopolysiloxane fails to form a stable linear polymer and is likely to gel. In case x ≥ 2.05, a higher molecular weight polymer is unlikely to form.

The diorganopolysiloxane (D) should preferably have a degree of polymerization of at least 1,000, more preferably at least 2,000, and most preferably 3,000 to 10,000, in order that the cured product have mechanical strength.

Preferred examples of the diorganopolysiloxane (D) include compounds of the following general formulae (II), (III), and (IV).

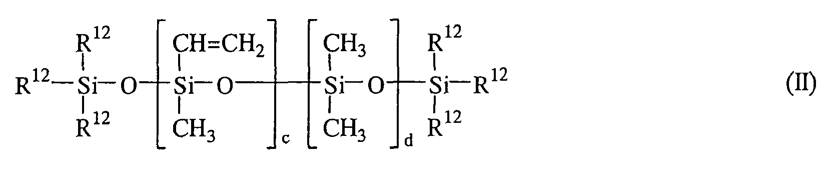

In formula (II), c is an integer of at least 1, d is an integer of at least 1, and c+d is preferably an integer of at least 1,000, more preferably at least 2,000, and most preferably 3,000 to 10,000, with the proviso that c and d have such values that the proportion of -CH=CH₂ groups in all silicon-bonded organic groups is 0.01 to 15 mol%. A plurality of R¹² may be the same or different and stand for methyl, vinyl or hydroxyl groups.

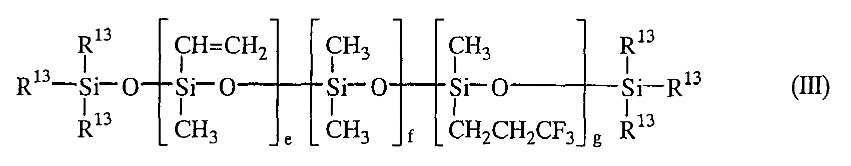

In formula (III), e is an integer of at least 1, f is an integer of at least 1, g is an integer of at least 1, and e+f+g is preferably an integer of at least 1,000, more preferably at least 2,000, and most preferably 3,000 to 10,000, with the proviso that e, f and g have such values that the proportion of -CH=CH₂ groups in all silicon-bonded organic groups is 0.01 to 15 mol%. A plurality of R¹³ may be the same or different and stand for methyl, vinyl, 3,3,3-trifluoropropyl or hydroxyl groups.

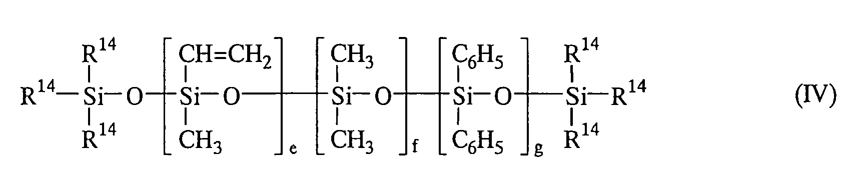

In formula (IV), e is an integer of at least 1, f is an integer of at least 1, g is an integer of at least 1, and e+f+g is preferably an integer of at least 1,000, more preferably at least 2,000, and most preferably 3,000 to 10,000, with the proviso that e, f and g have such values that the proportion of -CH=CH₂ groups in all silicon-bonded organic groups is 0.01 to 15 mol%. A plurality of R¹⁴ may be the same or different and stand for methyl, vinyl, phenyl or hydroxyl groups.

Of these, the compounds of formula (II) are most preferred.

The diorganopolysiloxane (D) may be prepared by well-known methods, for example, by (co)hydrolyzing one or more organohalosilanes to form a cyclic polysiloxane (consisting of three or four siloxane units), followed by ring-opening polymerization in the presence of a basic catalyst or acidic catalyst.

Component (E) is a reinforcing filler for imparting mechanical strength to the cured product. Examples include fumed silica, precipitated silica, fused silica, ground quartz, diatomaceous earth, aluminum silicate, titanium oxide, zinc oxide, iron oxide, alumina, calcium carbonate, zinc carbonate, and carbon black. Among others, silica is advantageously used for achieving reinforcement to a full extent, with the preferred silica having a specific surface area of at least 10 m²/g (BET method), more preferably at least 100 m²/g. Most preferred are fumed silica and precipitated silica having a specific surface area of 100 to 400 m²/g. The reinforcing filler (E) imparts to the cured product not only mechanical strength, but also electric conductivity, thermal conductivity or the like.

The reinforcing filler which can be used herein as component (E) may have been treated with surface treating agents including chlorosilanes such as (CH₃)₃SiCl, (CH₃)₂SiCl₂ and (CH₃)SiCl₃; alkoxysilanes such as CH₂=CHSi(OCH₃)₃, (CH₃)₂Si(OCH₃)₂ and CH₃Si(OCH₃)₃; organosilazanes such as (CH₃)₃SiNHSi(CH₃)₃; and silicone fluids having the following general formula: 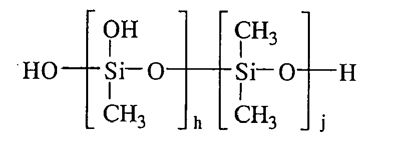 wherein h and j are numbers in the range: h > 0, j > 1, and 1 < h+j < 100. During the treatment, an aliquot of water may be added for adjusting and promoting the hydrolysis of surface treating agents.

The amount of component (E) used is generally 5 to 200 parts by weight, preferably 10 to 100 parts by weight per 100 parts by weight of component (D). Too small an amount of component (E) may lead to ineffective processing and achieve insufficient reinforcement. Too large an amount of component (E) may adversely affect workability and flow during molding, and even result in silicone rubber with low mechanical strength.

The crosslinker as component (F) may be any agent which causes the silicone rubber composition to cure. Depending on the curing system of the composition, component (F) may be a combination of organohydrogenpolysiloxane with platinum group metal catalyst or an organic peroxide.

In the embodiment wherein component (F) is a combination of organohydrogenpolysiloxane with platinum group metal catalyst, any organohydrogenpolysiloxane having at least two Si-H groups on the molecule is used while its structure may be linear, cyclic or branched. The Si-H groups may be located at ends or intermediate positions of the molecular chain. The organohydrogenpolysiloxane used herein preferably has a degree of polymerization of up to 300.

Illustrative, non-limiting examples of the organohydrogenpolysiloxane used herein include diorganopolysiloxanes end-capped with dimethylhydrogensilyl groups; copolymers consisting of dimethylsiloxy units, methylhydrogensiloxy units and terminal trimethylsiloxy units; low viscosity fluids consisting of dimethylhydrogensiloxy units and SiO₂ units; 1,3,5,7-tetrahydrogen-1,3,5,7-tetramethylcyclotetrasiloxane; 1-propyl-3,5,7-trihydrogen-1,3,5,7-tetramethylcyclotetrasiloxane; 1,5-dihydrogen-3,7-dihexyl-1,3,5,7-tetramethylcyclotetrasiloxane, etc, Preferably the organohydrogenpolysiloxane is used in such amounts that 0.5 to 3.0 moles, more preferably 1.0 to 2.0 moles of Si-H groups are available per mole of aliphatic unsaturated hydrocarbon groups in the diorganopolysiloxane (D).

The platinum group metal catalyst is to catalyze hydrosilylation reaction between aliphatic unsaturated hydrocarbon groups in the diorganopolysiloxane (D) and Si-H groups in the organohydrogenpolysiloxane. The catalyst is generally used in such amounts as to provide 0.1 to 2,000 ppm, preferably 1 to 1,000 ppm of platinum group metal based on the total weight of the diorganopolysiloxane (D) and the organohydrogenpolysiloxane. Typical platinum group metal catalysts are platinum catalysts including fine powder metallic platinum catalysts as described in USP 2,970,150, chloroplatinic acid catalysts as described in USP 2,823,218, platinum-hydrocarbon complexes as described in USP 3,159,601 and USP 3,159,662, chloroplatinic acid-olefin complexes as described in USP 3,516,946, and platinum-vinylsiloxane complexes as described in USP 3,775,452 and USP 3,814,780.

In an embodiment wherein the silicone rubber composition cures by itself via hydrosilylation reaction using a combination of organohydrogenpolysiloxane with platinum group metal catalyst as component (F), a reaction regulator such as methylvinylcyclotetrasiloxane or acetylene alcohols (e.g., ethynyl cyclohexanol) may be added for ensuring that the composition has good storage stability at room temperature and an appropriate pot life. The cure via hydrosilylation reaction is effected by heating at a temperature of about 60 to 400°C for about 1 minute to about 5 hours.

An alternative crosslinking agent as component (F) is an organic peroxide. The organic peroxide is generally added in an amount of 0.01 to 3 parts by weight, preferably 0.05 to 1 part by weight per 100 parts by weight of the diorganopolysiloxane (D). Use may be made of organic peroxides which are commonly used for curing of peroxide curing type silicone rubber compositions. Examples include benzoyl peroxide, bis(2,4-dichlorobenzoyl)peroxide, di-t-butyl peroxide, 2,5-dimethyl-di-t-butylperoxyhexane, t-butylperbenzoate, t-butylperoxyisopropyl carbonate, and dicumyl peroxide, which may be used alone or in combination.

In an embodiment wherein the silicone rubber composition cures by itself using an organic peroxide as component (F), it is generally heated at a temperature of about 100 to 400°C for about 1 minute to about 5 hours.

It is also acceptable to use both a combination of organohydrogenpolysiloxane with platinum group metal catalyst and an organic peroxide as component (F).

Like the silicone rubber composition, the fluororubber composition used herein is capable of both peroxide crosslinking and addition crosslinking. Many crosslinking parameters are common between these compositions.

For a blend, there may be four combinations of crosslinking modes because each of the fluororubber composition and the silicone rubber composition has two crosslinking modes, peroxide crosslinking and addition crosslinking. However, it is necessary to combine a fluororubber composition of a certain crosslinking mode with a silicone rubber composition of the same crosslinking mode so that the compositions may take a common reaction system.

It is then believed that co-crosslinkage occurs between the fluororubber composition and the silicone rubber composition because they have a common crosslinking system. The blend does not exhibit extreme drops of physical properties which otherwise occur due to a blending ratio. It is free of delamination when a dumbbell-shaped specimen for physical property measurement is observed in cross section.

A blend in which compositions of different crosslinking modes are combined manifests drops of physical properties as well as delamination. When such a blend is molded in a mold, it is difficult to remove burrs.

As long as the crosslinking modes are identical, the fluororubber composition and the silicone rubber composition may be blended in any desired ratio, without any particular limit. Preferably one of the compositions is blended in a ratio of at least 5% by volume, because the resulting blend can have all the advantages of the two types of rubbers. More specifically, the blending volume ratio of the fluororubber composition (a) and the silicone rubber composition (b) is preferably 95:5 to 5:95, more preferably 85:15 to 15:85, especially 75:25 to 25:75. The blending procedure is not particularly limited. Use may be made of mixing apparatus ordinarily used in rubber mixing, such as two-roll mills, kneaders, pressure kneaders and Banbury mixers.

With regard to the curing of the rubber composition obtained by blending (a) a perfluoropolyether-base fluororubber composition having Si-CH=CH₂ as crosslinking sites with (b) a silicone rubber composition of the same crosslinking system, primary curing is preferably at a temperature of 100 to 200°C for a time of 1 to 30 minutes. Temperatures below 100°C may require longer curing times, which are detrimental to commercial production, whereas temperatures above 200°C have the risk of scorching. A temperature in the range of 100 to 200°C is thus preferred, with the range of 120 to 170°C being more preferred. The curing time is determined as appropriate to forward crosslinking reaction to completion.

Depending on a particular purpose, a working method may be selected from customary working methods used with silicone rubbers including press molding, calendering, and extrusion molding.

Like ordinary silicone rubber compositions, the rubber composition of the invention is preferably subjected to secondary curing for stabilized physical properties. The secondary curing may be heat treatment at about 100 to 230°C for about 1 to 24 hours. Temperatures below 100°C are less effective whereas thermal decomposition can occur at temperatures above 230°C. Preferred conditions for secondary curing are about 150 to 200°C and about 1 to 20 hours.

By molding and curing the rubber composition, there are obtained molded articles which will find a variety of applications. The molded articles are often used as automotive rubber parts where oil resistance is required, for example, diaphragms such as fuel regulator diaphragms, pulsation damper diaphragms, oil pressure switch diaphragms, and EGR diaphragms, valves such as canister valves and power control valves, O-rings such as quick connector O-rings and injector O-rings, and seal members such as oil seals and cylinder head gaskets; chemical plant rubber parts, for example, pump diaphragms, valves, O-rings, hoses, packing members, oil seals, gaskets and other seal members; rubber parts for ink jet printers, rubber parts for semiconductor manufacturing lines, for example, diaphragms, valves, O-rings, packing members, gaskets and seal members for apparatus to come in contact with chemicals, and valves which are required to have low friction and abrasion resistance; rubber parts for analytical and experimental equipment, such as pump diaphragms, valves, seal members (e.g., O-rings and packing); rubber parts for medical equipment, such as pumps, valves and joints; and tent coating materials, sealants, molded parts, extruded parts, coats, copier roll materials, electrical moisture-proof coatings, sensor potting materials, fuel cell sealing materials, and laminate rubber fabrics.

### EXAMPLE

Examples of the invention are given below by way of illustration and not by way of limitation.

### Compositions used in Examples and Comparative Examples

A: perfluoropolyether-base fluororubber composition I, SIFEL 5701 (Shin-Etsu Chemical Co., Ltd., addition crosslinking, millable type standard composition containing components (A) to (C))
B: perfluoropolyether-base fluororubber composition II, SIFEL 9700 (Shin-Etsu Chemical Co., Ltd., peroxide crosslinking, millable type standard composition containing components (A) to (C))
C: silicone rubber composition I, KE971, peroxide crosslinking, standard composition containing components (D) to (F) (Shin-Etsu Chemical Co., Ltd.)
D: silicone rubber composition II, KE971, addition crosslinking, standard composition containing components (D) to (F) (Shin-Etsu Chemical Co., Ltd.)
E: silicone rubber composition I, KE951, peroxide crosslinking, standard composition containing components (D) to (F) (Shin-Etsu Chemical Co., Ltd.)
F: silicone rubber composition I, KE951, addition crosslinking, standard composition containing components (D) to (F) (Shin-Etsu Chemical Co., Ltd.)

### Blending and molding of compositions

1. Two rubber compositions were mixed in a predetermined blending ratio as shown in Tables 1 to 4 on a 3.5-inch twin-roll rubber mill. At the end, the blend was examined for roll milling efficiency.
2. The blend was formed into a sheet and an O-ring having a solid diameter of 3.5 mm, which were crosslinked on a 75-ton press at 150°C for 10 minutes and post-cured at 200°C for 4 hours.
3. A dumbbell specimen was punched out of the sheet. The specimen was measured for physical properties and observed in cross section for delamination. The O-ring was inspected for deburring, and measured for compression set under conditions: 200°C, 72 hours, and 25% compression.
4. The sheet was immersed in toluene at 23°C for 72 hours, after which it was measured for swell, according to the method defined in JIS K6258.

### Roll milling

Roll milling was rated good (O) for effective roll milling with no sticking to rolls and poor (×) for inefficient roll milling with sticking to rolls.

### Delamination test

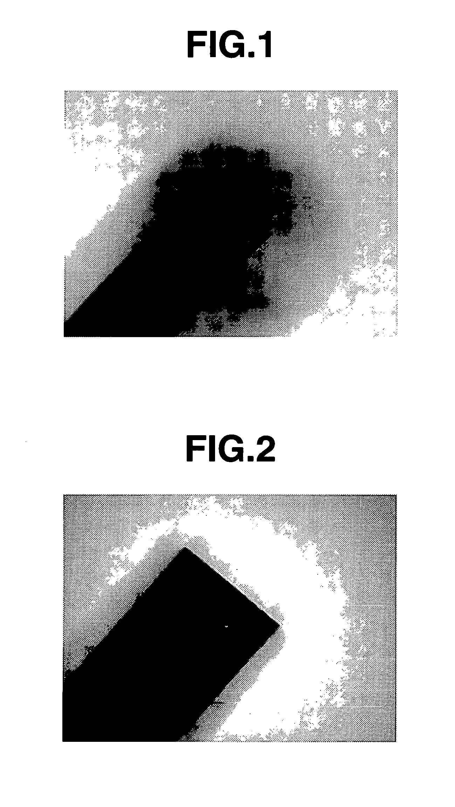

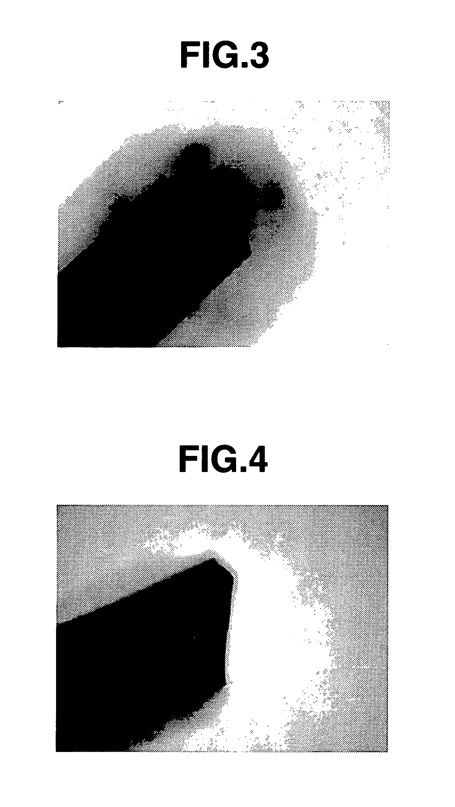

The dumbbell specimen used in the physical property measurement was observed in cross section and rated, on the scale of photographs of FIGS. 1 to 4, good (○) when the rubber rupture section was free of anomaly or delamination and poor (×) when the rupture section was uneven, indicating delamination.

### Deburring test

The composition was rated good (○) when ease of deburring ensures a satisfactory O-ring and poor (×) when burrs were not successfully removed due to a delamination phenomenon, with a need for finishing with scissors.

### Examples 1-3 and Comparative Examples 1-2

Compositions were prepared by blending a fluorinated composition (A) of addition crosslinking type which is to be cured in a cured product having a hardness of 70 with a silicone rubber molding (D) having the same crosslinking type which is to be cured in a cured product having the same hardness in a varying ratio. The test results are shown in Table 1.

The cured products experienced no extreme drops of physical properties at any blending ratio and were free of delamination. It was demonstrated that as a result of blending, the roll milling and compression set drawbacks of the fluorinated rubber composition are improved while the

**Table 1**

| | | Comparative Example 1 | Example 1 | Example 2 | Example 3 | Comparative Example 2 |
|---|---|---|---|---|---|---|
| Blending condition | Blending ratio by volume A/D | 100/0 | 70/30 | 50/50 | 30/70 | 0/100 |
| | Roll milling | × | ○ | ○ | ○ | ○ |
| Sheet property | Hard-ness | 70 | 73 | 72 | 72 | 70 |
| | Tensile strength (Mpa) | 9.6 | 9 | 8.5 | 6.8 | 6.8 |
| | Elongation (%) | 330 | 270 | 270 | 210 | 220 |
| | Tear strength (kN/m) | 10 | 14 | 12 | 9 | 9 |
| | Toluene swell (%) | 6.6 | 26.3 | 41.9 | 63.3 | 93.4 |
| | Delamination | ○ | ○ | ○ | ○ | ○ |
| O-ring property | Compression set (%) | 36 | 33 | 33 | 27 | 27 |
| | Deburring | ○ | ○ | ○ | ○ | ○ |

### Examples 4-6 and Comparative Examples 3-4

Compositions were prepared by blending a fluorinated composition (B) of peroxide crosslinking type which is to be cured in a cured product having a hardness of 70 with a silicone rubber molding (C) having the same crosslinking type which is to be cured in a cured product having the same hardness in a varying ratio. The test results are shown in Table 2.

As in the addition crosslinking type, the cured products experienced no extreme drops of physical properties at any blending ratio and were free of delamination. It was demonstrated that blending offers benefits as in the addition crosslinking type.

**Table 2**

| | | Comparative Example 3 | Example 4 | Example 5 | Example 6 | Comparative Example 4 |
|---|---|---|---|---|---|---|
| Blending condition | Blending ratio by volume A/D | 100/0 | 70/30 | 50/50 | 30/70 | 0/100 |
| | Roll milling | × | ○ | ○ | ○ | ○ |
| Sheet property | Hard-ness | 72 | 72 | 72 | 72 | 70 |
| | Tensile strength (Mpa) | 9.6 | 8.2 | 7.6 | 7.3 | 7.3 |
| | Elongation (%) | 260 | 270 | 220 | 220 | 190 |
| | Tear strength (kN/m) | 11 | 10 | 10 | 9 | 8 |
| | Toluene swell (%) | 11.2 | 30.6 | 47.6 | 65.1 | 92.9 |
| | Delamination | ○ | ○ | ○ | ○ | ○ |
| O-ring property | Compression set (%) | 32 | 33 | 30 | 25 | 22 |
| | Deburring | ○ | ○ | ○ | ○ | ○ |

### Examples 7-8 and Comparative Examples 5-6

These examples demonstrate blending of rubber materials having different hardness. Compositions were prepared by blending a silicone rubber (F) of addition crosslinking type which is to be cured in a cured product having a hardness of 50 or a silicone rubber (E) of peroxide crosslinking type which is to be cured in a cured product having a hardness of 50 with a fluorinated composition (A or B) of the same crosslinking type which is to be cured in a cured product having a hardness of 70. The test results are shown in Table 3.

Blends of different materials without co-crosslinkage are likely to delaminate when the materials combined have widely differing physical properties, typically a substantial hardness difference. By contrast, the cured products within the scope of the invention manifested no delamination. It is noted that these examples omitted the tests of toluene swell and compression set.

**Table 3**

| Comparative Example 5 | | | Example 7 | Example 6 | Comparative Example 8 |
|---|---|---|---|---|---|
| Blending | Combination of compositions | F:A | F:A | E:B | E:B |
| | Blending ratio by volume | 100/0 | 50/50 | 100/0 | 50/50 |
| | Roll milling | ○ | ○ | ○ | ○ |
| Sheet property | Hard-ness | 52 | 63 | 51 | 63 |
| | Tensile strength (Mpa) | 7.7 | 10.2 | 10.2 | 9.1 |
| | Elongation (%) | 330 | 310 | 410 | 260 |
| | Tear strength (kN/m) | 8 | 10 | 7 | 9 |
| | Delamination | ○ | ○ | ○ | ○ |
| property property | Deburring | ○ | ○ | ○ | ○ |

### Comparative Examples 7-9

For proving the benefits of the invention, these examples used blends of rubber materials of different crosslinking systems. Compositions were prepared by blending a silicone rubber (E) of peroxide crosslinking type which is to be cured in a cured product having a hardness of 50 with a fluorinated composition (A) of addition crosslinking type which is to be cured in a cured product having a hardness of 70 in a varying ratio. The test results are shown in Table 4. Delamination occurred at every blend ratio. Because delamination was detected, these examples omitted the tests of toluene swell and compression set.

**Table 4**

| | | Comparative Example 7 | Comparative Example 8 | Comparative Example 9 |
|---|---|---|---|---|
| Blending condition | Combination of compositions | A:E | A:E | A:E |
| | Blending ratio by volume | 70/30 | 50/50 | 30/70 |
| | Roll milling | ○ | ○ | ○ |
| Sheet property | Hard-ness | 65 | 60 | 55 |
| | Tensile strength (Mpa) | 9.8 | 9.6 | 10.2 |
| | Elongation (%) | 290 | 350 | 380 |
| | Tear strength (kN/m) | 12 | 12 | 10 |
| | Delamination | × | × | × |
| O-ring property | Deburring | × | × | × |

## Claims

1. A rubber composition comprising in admixture (a) a perfluoropolyether-base fluororubber composition having Si-CH=CH₂ as crosslinking sites and (b) a silicone rubber composition having the same crosslinking system as component (a).

2. The rubber composition of claim 1 wherein the crosslinking system common to the fluororubber composition and the silicone rubber composition is a peroxide crosslinking system.

3. The rubber composition of claim 1 wherein the crosslinking system common to the fluororubber composition and the silicone rubber composition is an addition crosslinking system.

4. The rubber composition of any one of claims 1 to 3 wherein said perfluoropolyether-base fluororubber composition (a) is a crosslinkable fluororubber composition comprising
(A) a polymer obtained from a perfluoro compound having at least two alkenyl groups on the molecule and a divalent perfluoroalkylene or perfluoropolyether structure on the backbone and a second compound having at least two hydrosilyl groups on the molecule and capable of addition reaction with alkenyl groups, the second compound being added to some of the alkenyl groups on the perfluoro compound,
(B) a reinforcing filler, and
(C) an addition reaction crosslinker having a hydrosilyl group on the molecule or a peroxide crosslinker in a sufficient amount for component (A) to cure.

5. The rubber composition of any one of claims 1 to 4 wherein said silicone rubber composition (b) comprises
(D) a diorganopolysiloxane having the average compositional formula (I):
(R¹¹)ₓSiO_{(4-x)/2} (I)
wherein R¹¹ is a substituted or unsubstituted monovalent hydrocarbon group and x is a number of 1.95 < x < 2.05, 0.01 to 15 mol% of all R¹¹ bonded to silicon atoms being monovalent aliphatic unsaturated hydrocarbon groups,
(E) a reinforcing filler, and
(F) a crosslinker.

6. A molded rubber article produced by molding and curing the rubber composition of any one of claims 1 to 5.

7. The molded rubber article of claim 6 which is a sealing member, O-ring, diaphragm, hose, cap or valve part.

8. A method of preparing a rubber composition according to any one of claims 1 to 5, comprising combining the fluororubber and the silicone rubber.

9. Use of a rubber composition according to any one of claims 1 to 5 for making articles by molding.
